# EUROPÄISCHE PATENTSCHRIFT

(11) **EP 0 329 045 B1**
(45) Veröffentlichungstag und Bekanntmachung des Hinweises auf die Patenterteilung: **16.06.1993**
(21) Anmeldenummer: 89102393.9
(22) Anmeldetag: 11.02.1989
(51) Int. Cl.: B60K 41/24

(54) **Antriebs- und Bremsvorrichtung für ein Kraftfahrzeug**
Propulsion and braking device for a motor vehicle
Dispositif de propulsion et de freinage pour automobile

(30) Priorität: 16.02.1988 US 155772; 14.10.1988 US 257574
(43) Veröffentlichungstag der Anmeldung: 23.08.1989
(73) Patentinhaber: DEERE & COMPANY, Moline, Illinois 61265 (US)
(72) Erfinder: Moon, Seaton, Cedar Falls Iowa 50613 (US); Bergene, Mark Allen, Cedar Falls Iowa 50613 (US)
(74) Vertreter: Feldmann, Bernhard

(56) Entgegenhaltungen:
- EP-A- 0 039 069
- US-A- 4 635 743
- PATENT ABSTRACTS OF JAPAN vol. 2, no. 142 (M-78)(4767) 24 November 1978, & JP-A-53 111937 (ISEKI NOKI) 29 September 1978,
- PATENT ABSTRACTS OF JAPAN vol. 1, no. 1 (M-76)(85) 01 März 1977, & JP-A-51 112031 (KUBOTA TEKKO) 10 April 1976,

## Beschreibung

Die Erfindung betrifft eine Antriebs- und Bremsvorrichtung für ein Kraftfahrzeug gemäß dem Oberbegriff des Patentanspruches 1. Das Fahrzeug hat beispielsweise eine ständig angetriebene Hinterachse und eine Vorderachse, die auf Wunsch zu dem Antriebsstrang zuschaltbar ist, was durch Ein- oder Auskuppeln einer die Vorderachse mit dem Antriebsstrang verbindenden Kupplung erfolgt.

Im Handel befinden sich Schlepper, auf die die vorliegende Erfindung insbesondere Anwendung finden soll, bei denen ein Steuersystem vorgesehen ist, welches automatisch den Vierradantrieb zuschaltet, wenn eine Bremsanforderung vorliegt, und welche automatisch den Vierradantrieb abschaltet, sofern die Schleppergeschwindigkeit größer ist als ca. 14 km/h. Dieses bekannte Steuersystem schaltet jedoch den Vierradantrieb nicht schon dann automatisch ab, wenn lediglich entweder die linke oder die rechte Bremse betätigt wird. Dies ist nachteilig, da bei dem Betrieb eines landwirtschaftlichen Schleppers häufig lediglich eine der linken oder rechten Fußbremsen betätigt wird, um die Lenkung des Schleppers für ein Lenkmanöver über ungepflügtem Land zur Unterstützung heranzuziehen. Bleibt der Vierradantrieb während eines solchen durch die Bremsen unterstützten Lenkvorganges in Eingriff, so erfordert dies eine höhere Bremskraft. Ferner erhöht dies das Schieben, Rutschen und die Abnützung der Vorderräder.

Aus der DE-C-29 46 477 ist eine Antriebs- und Bremsvorrichtung bekannt, bei der die Vorderräder durch eine Kupplung zu dem Antriebsstrang zwangsläufig zugeschaltet werden, sofern die Hinterradbremsen betätigt werden. Dadurch wird die an den Radbremsen der Hinterräder auftretende Bremskraft an die Vorderräder übertragen, so daß die Vorderräder auf jeden Fall zur Bremsung herangezogen werden. Dies kann jedoch zu einer Beeinträchtigung der bremsunterstützenden Lenkung führen, wenn lediglich die linke oder rechte Radbremse betätigt wird. Gemäß einer in der DE-C-29 46 477 beschriebenen Ausführungsart steuert ein magnetspulenbetätigtes Ventil eine hydraulische Kupplung für den Vorderradantrieb. Durch Erregung der Magnetspule wird ein Schalter beeinflußt, welcher bei einer Bremsanforderung anspricht. Die Bremsvorrichtung gemäß der DE-C-29 46 477 erfordert ein Verteilerventil, welches hydraulisch mit dem linken und rechten Bremszylinder in Verbindung steht, sowie einen Kolben, welcher hydraulisch mit dem Verteilerventil und mechanisch mit dem bei Bremsbetätigung ansprechenden Schalter verbunden ist. Dieses System beinhaltet daher teure hydraulische Komponenten, welche überdies hydraulische Flüssigkeit binden, die jedoch bei einer Notbremsung erforderlich sein könnte.

Die JP-A-53 111937 beschreibt eine Steuereinrichtung für eine elektromagnetisch betätigbare Frontantriebskupplung eines landwirtschaftlichen Fahrzeuges mit Vierradantrieb. Die Frontantriebskupplung ist in einem Stromkreis angeordnet und kuppelt den Vorderradantrieb bei offenem Stromkreis aus dem Antriebsstrang aus. Der Stromkreis enthält zwei in Serie liegende normalerweise geschlossene Schalter, die einer linken bzw. rechten Betriebsbremse zugeordnet sind und sich bei Betätigung der zugehörigen Betriebsbremse öffnen. Die Steuereinrichtung schaltet die Vorderräder immer dann in den Antriebsstrang, wenn wenigstens eine der beiden Bremsen betätigt wird. Hierdurch sollen beim Bremsen sowohl die Hinter- als auch die Vorderräder die Bodenhaftreibung aufnehmen. Auch hierbei kann die bremsunterstützte Lenkung beeinträchtigt sein.

Die JP-A-51 112031 gibt einen Unterbrechungsmechanismus für einen Vorderradantrieb eines Traktors mit Vierradantrieb der eingangs genannten Art an, der die bremsunterstützte Lenkung durch einseitige Abbremsung der Hinterräder erleichtern soll. Durch ein linkes und ein rechtes Hinterradbremspedal läßt sich ein Kupplungshebel betätigen, wodurch sich eine Frontantriebskupplung einrücken läßt, um die Vorderräder in den Antriebsstrang zu schalten. Ist keines der beiden Hinterradbremspedale betätigt, so ist die Frontantriebskupplung eingerückt, und alle vier Räder werden angetrieben. Wird nach einem Eckenfahren und einer Betätigung einer der Hinterradpedale dieses wieder freigegeben, so wird die Frontantriebskupplung eingerückt, so daß der Traktor wieder unter Beteiligung des Frontantriebes fährt. Bei dieser Lösung ist bei einer Abbremsung bei Geradeausfahrt oder leichten Kurven eine Unterstützung des Bremseffektes durch die Vorderräder nicht möglich.

Die Aufgabe der vorliegenden Erfindung wird darin gesehen, eine Antriebs- und Bremsvorrichtung der eingangs genannten Art dahingehend weiterzubilden, daß einerseits bei einer Bremsanforderung die Vorderräder in den Bremsvorgang einbezogen sind, und andererseits eine Bremslenkung durch Betätigung der linken oder rechten Hinterradbremse möglich ist.

Die Aufgabe wird bei einer gattungsgemäßen Antriebs- und Bremsvorrichtung durch die kennzeichnenden Merkmale des Patentanspruches 1 gelöst.

Wird also lediglich entweder die rechte oder die linke Betriebsbremse betätigt, so wird nur das entsprechende Hinterrad abgebremst. Die Vorderräder laufen frei und unabhängig vom Antriebsstrang mit. Hierdurch wird es vermieden, daß die Vorderräder über den Untergrund geschoben werden bzw. rutschen. Die Abnutzung der Vorderräder wird damit durch das Lenkbremsen nicht erhöht. Werden hingegen beide Hinterradbremsen durch Betätigung des rechten und linken Bremspedals ausgelöst, so schaltet die Kupplung automatisch auch die Vorderachse in den Antriebsstrang ein, so daß auch die Vorderräder am Bremsvorgang beteiligt sind.

Einer besonders vorteilhaften Ausgestaltung der Erfindung zufolge ist ein Geber zur Erfassung der Fahrzeuggeschwindigkeit vorgesehen. Ferner weist die Kupplungssteueranordnung Mittel auf, um bei Überschreiten eines vorgebbaren Geschwindigkeitswertes die weitere Achse aus dem Antriebsstrang automatisch auszukuppeln. Hierdurch läßt sich automatisch bei schneller Fahrt des Schleppers die Vorderachse vom Anstriebsstrang trennen, was beispielsweise bei Transportfahrten wegen der Treibstoffersparnis erwünscht ist.

Eine vorteilhafte Ausbildung der Erfindung ist durch die Merkmale des Patentanspruches 3 gegeben, denen zufolge die Antriebs- und Bremsvorrichtung drei durch die Bremsen betätigbare Schalter enthält, welche mit dem linken oder rechten Betriebsbremspedal derart verbunden sind, daß bei Herunterdrücken lediglich eines Bremspedals, einer oder zwei der Schalter seinen Schaltzustand ändert. Durch die Auswahl und Anordnung der Schalter läßt sich erreichen, daß je nach Bremsbetätigung ein Strompfad zwischen einer Spannungsquelle und der Magnetspule des Kupplungsventiles unterbrochen bzw. geschlossen wird. Ist die Kupplung beispielsweise durch ein Druckmittel nur dann in Lösestellung gehalten, wenn die Magnetspule mit der Spannungsquelle verbunden ist, so müssen die Schalter derart zusammenwirken, daß der Strompfad in der Regel unterbrochen bleibt und lediglich dann geschlossen wird, wenn nur die linke oder rechte Betriebsbremse betätigt wird. Diese Ausgestaltung hat gegenüber der inversen Lösung, bei der die Lösestellung der Kupplung bei einem spannungsfreien Magnetventil erreicht wird, den Vorteil, daß auch bei Unterbrechung der Stromversorgung eine einfache Bremsung mit allen vier Rädern möglich ist.

Vorzugsweise wird die Fahrzeuggeschwindigkeit erfaßt und in einem Vergleichskreis mit einem vorgebbaren Wert verglichen. Der Vergleichskreis gibt Signale an einen Schalter ab. Durch diesen geschwindigkeitsempfindlichen Schalter läßt sich ein Strompfad zwischen der Spannungsquelle und der die Kupplung steuernden Magnetspule unterbrechen bzw. schließen, und zwar je nach Wirkungsweise des die Kupplung steuernden Magnetventils.

Um die automatische Steuerung der Kupplung abstellen zu können und den Schaltzustand der Kupplung von Hand beeinflussen zu können, ist es zweckmäßig, einen handbetätigbaren Betriebsartschalter vorzusehen, der auf der Konsole der Fahrzeugkabine angeordnet ist. Der Betriebsartschalter hat vorzugsweise drei Schaltpositionen für "Kupplung ein", "Kupplung aus" und "Automatik". In der Automatikstellung können die bereits beschriebenen, durch die Bremspedale betätigbaren Schalter wirksam werden. Der Betriebsartschalter kann zweipolig ausgelegt werden, wobei beide Pole mechanisch miteinander gekoppelt sind. Der zweite Pol kann dabei die Aufgabe haben, daß das Fahrgeschwindigkeitssignal nur dann Einfluß auf den Zustand der Kupplung hat, wenn der Betriebsartschalter sich in seiner Automatikposition befindet.

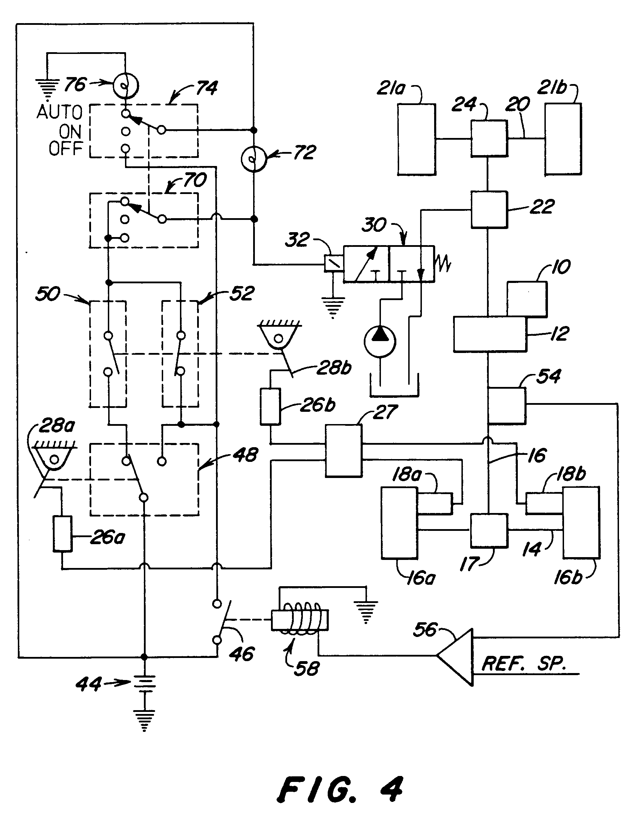

Ferner kann durch den zweiten Pol des Betriebsartschalters auch sichergestellt werden, daß auch in seiner "OFF"-Position die Kupplung dann die Vorderradachse zum Antriebsstrang zuschaltet, wenn beide Bremspedale betätigt werden (Fig. 4).

Zweckmäßigerweise sind auch Anzeigen, z.B. Anzeigelampen, vorgesehen, die auf der Konsole der Fahrzeugkabine angeordnet sein können. Die Anzeigemittel können beispielsweise Aufschluß über die Betriebsart, also über den Betriebszustand des Betriebsartschalters, oder über den Schaltzustand der Kupplung geben. Zur Realisierung der Betriebsartsanzeige kann zweckmäßigerweise die Anzeigelampe in einem Stromkreis mit dem zweiten Pol des Betriebsartschalters liegen. Der Schaltzustand der Kupplung läßt sich zweckmäßigerweise durch eine Lampe anzeigen, die zwischen Masse und einem Anschluß der die Kupplung beeinflussenden Magnetspule liegt.

Anhand der Zeichnung, in der mehrere Ausführungsbeispiele der Erfindung gezeigt sind, sollen die Erfindung sowie weitere vorteilhafte Ausgestaltungen und Weiterbildungen der Erfindung beschrieben und näher erläutert werden.

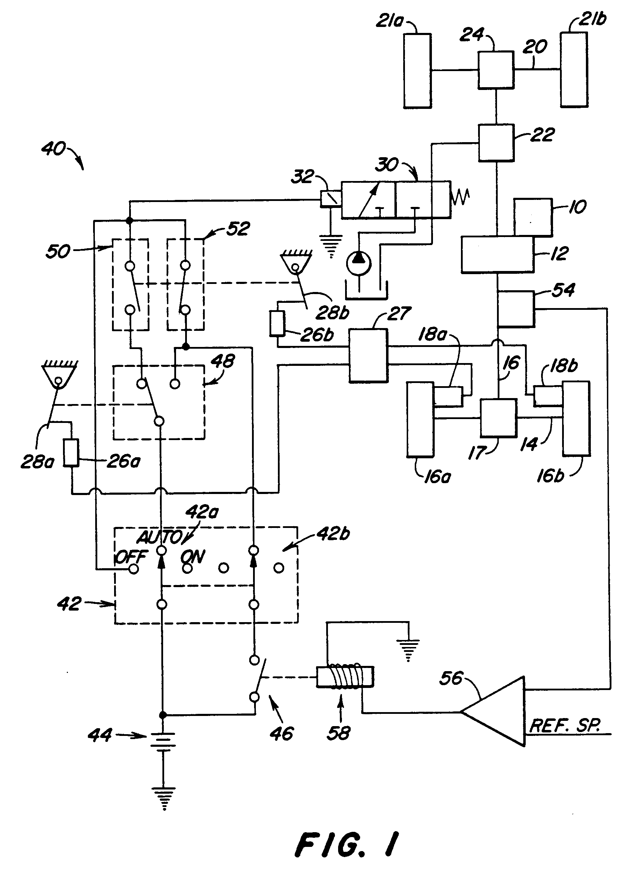

Die Figuren 1 bis 4 zeigen vier unterschiedliche schematische Diagramme, die verschiedene erfindungsgemäße Antriebs- und Bremsvorrichtungen darstellen.

Soweit die Diagramme übereinstimmen, werden sie gemeinsam beschrieben. Gleiche oder sich entsprechende Bauteile werden im folgenden mit den gleichen Bezugsziffern belegt.

Ein Fahrzeug, beispielsweise ein Ackerschlepper, enthält eine Antriebsmaschine 10, die über ein Getriebe 12, eine Welle 16 und ein Differential 17 eine Hinterachse 14 antreibt. Die Hinterachse 14 trägt ein Paar hintere Antriebsräder 16a, 16b, welche jedes eine zugehörige Betriebsbremse 18a, 18b aufweist. Die Antriebsmaschine 10 treibt ferner über eine druckmittelbetätigte Kupplung 22 und ein Differential 24 eine Vorderachse 20 mit den zugehörigen Vorderrädern 21a, 21b an. Die Betriebsbremsen 18a, 18b werden in üblicher Weise hydraulisch durch Steuerzylinder 26a, 26b betätigt, wobei die Steuerzylinder mit entsprechenden Bremspedalen 28a, 28b über ein übliches Bremsausgleichventil 27 in Verbindung stehen.

Die Kupplung 22 ist vorzugsweise eine bekannte federbelastete Kupplung, die durch Drucköl gegen die Federkraft in Lösestellung gehalten wird, wie sie beispielsweise in der DE-C-29 46 477 beschrieben wurde. Der Druck in der Kupplung 22 wird durch ein Ventil 30 gesteuert, welches seinerseits durch eine Magnetspule 32 betätigt wird.

Der in Fig. 1 dargestellte Steuerkreis 40 steuert den Erregungszustand der Magnetspule 32. Der Steuerkreis 40 enthält einen zweipoligen, handbetätigbaren Schalter 42, der drei Schaltpositionen aufweist und vorzugsweise in der nicht gezeigten Fahrzeugkabine angeordnet ist. Der Schaltpol 42a enthält einen ersten Anschluß, welcher mit einer Spannungsquelle 44, beispielsweise der Batterie des Fahrzeuges, verbunden ist. Durch Umschalten läßt sich der erste Anschluß (Eingangsanschluß) mit einem zweiten, einem dritten oder einem vierten Anschluß (Ausgangsanschlüsse) verbinden. Ein zweiter Schaltpol 42b des Schalters 42 weist einen ersten Anschluß (Eingangsanschluß) auf, der mit der Batterie 44 über ein Schaltschütz 46 in Verbindung steht. Dieser erste Anschluß des Schaltpoles 42b, läßt sich ebenfalls durch Umschalten mit einem zweiten, dritten und vierten Anschluß (Ausgangsanschlüsse) verbinden.

Der Steuerkreis 40 enthält ferner einen durch ein Bremspedal betätigbaren Umschalter 48 mit einem ersten, einem zweiten und einem dritten Anschluß. Der erste Anschluß (Eingangsanschluß) ist mit dem zweiten Anschluß des Schaltpoles 42a verbunden. Das Schaltelement des Umschalters 48 steht wirkungsmäßig mit dem linken Bremspedal 28a derart in Verbindung, daß dann, wenn das Pedal 28a nicht betätigt ist, der erste Anschluß mit dem zweiten Anschluß in Verbindung steht, und wenn das Pedal 28a niedergedrückt wird, der erste Anschluß mit dem dritten Anschluß verbunden ist.

Ein normalerweise offener, durch eine Bremse betätigbarer Ausschalter 50 hat einen ersten und einen zweiten Anschluß. Der erste Anschluß (Eingangsanschluß) ist mit dem zweiten Anschluß des Umschalters 48 verbunden. Der zweite Anschluß (Ausgangsanschluß) ist mit einem Anschluß der Magnetspule 32 verbunden. Das Schaltelement des Ausschalters 50 steht wirkungsmäßig mit dem rechten Bremspedal 28b in Verbindung, so daß bei unbetätigter Bremse der Schalter 50 offen ist und bei niedergetretenem Bremspedal 28b der Schaltkontakt geschlossen ist.

Ein normalerweise geschlossener, durch ein Bremspedal betätigbarer Umschalter 52 enthält einen ersten und einen zweiten Anschluß. Der erste Anschluß (Eingangsanschluß) ist mit dem dritten Anschluß des Umschalters 48 sowie mit dem zweiten Anschluß des Schaltpoles 42b verbunden. Der zweite Anschluß (Ausgangsanschluß) ist mit einem Anschluß der Magnetspule 32 verbunden. Das Schaltelement des Ausschalters 52 steht wirkungsmäßig mit dem rechten Bremspedal 28b derart in Verbindung, daß bei unbetätigtem Pedal 28b der Schalter 52 geschlossen ist und bei betätigtem Pedal 28b der Schalter offen ist.

Ein Geschwindigkeitsgeber 54 erfaßt die Fahrzeuggeschwindigkeit und liefert ein der Geschwindigkeit entsprechendes Signal zu einem Vergleichskreis 56. Der Vergleichskreis 56 kann einen üblichen Komparator und Verstärker enthalten, die mit der Spule 58 des Schaltschützes 46 derart in Verbindung stehen, daß die Spule 58 nur dann erregt und der Schaltkontakt nur dann geschlossen wird, wenn die Fahrzeuggeschwindigkeit einen vorherbestimmbaren Wert übersteigt.

Steht der Schalter 42, wie dies Fig. 1 zeigt, auf der "AUTO"-Position, so bewirkt der Steuerkreis 40, daß die Kupplung 22 dann eingreift und die Vorderräder zum Antriebsstrang zuschaltet, wenn beide Bremsen betätigt werden. Die Kupplung 22 wird gelöst, wenn lediglich eines der beiden Bremspedale 28a, 28b niedergedrückt wird. Wird keines der beiden Bremspedale 28a, 28b betätigt, so steht die Kupplung 22 immer dann in Eingriff, wenn die Fahrzeuggeschwindigkeit einen bestimmten Geschwindigkeitswert, beispielsweise ca. 14 km/h, überschreitet. Im letzten Fall schließt das Schaltschütz 46, wodurch die Magnetspule 32 erregt und die Kupplung 22 gelöst wird.

Befindet sich der Schalter 42 in der "OFF"-Position, so ist die Magnetspule 32 an die Batterie 44 angeschlossen und daher erregt. Die Kupplung 22 ist nicht im Eingriff. Befindet sich der Schalter 42 in der "ON"-Position, so wird die Magnetspule 32 nicht erregt und die Kupplung 22 steht in Eingriff und verbindet die Vorderräder 21a, 21b mit dem Antriebsstrang. Sowohl in der "OFF"- als auch in der "ON"-Position wird die Magnetspule 32 weder durch eine Bremsbetätigung noch durch die Fahrzeuggeschwindigkeit beeinflußt.

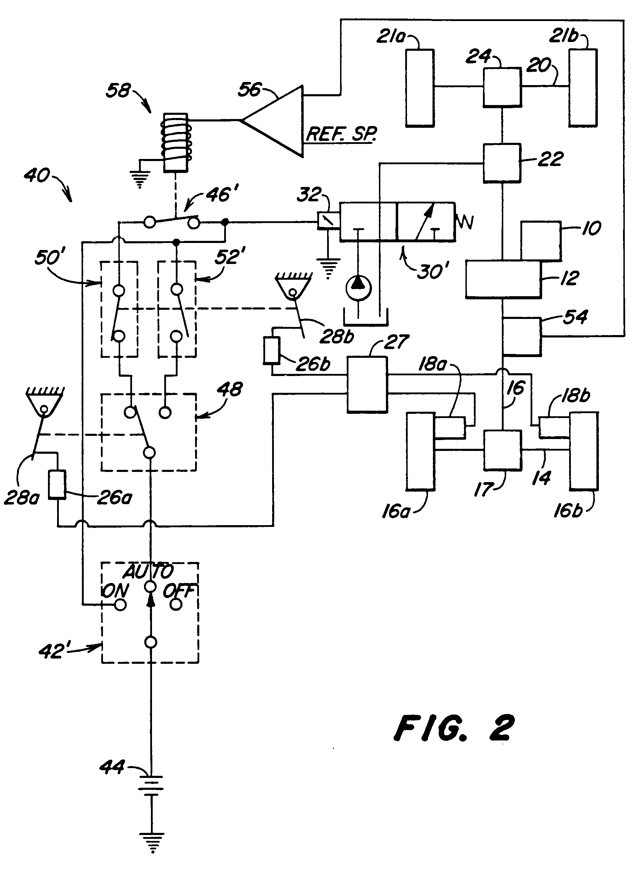

Eine zweite Ausführung der Erfindung geht aus Fig. 2 hervor, in der der Schalter 50 (gemäß Fig. 1) durch einen normalerweise geschlossenen Schalter 50' und der Schalter 52 (gemäß Fig. 1) durch einen normalerweise offenen Schalter 52' ersetzt wurden. Der Schaltkontakt 42b entfällt hier und der Schalter 42' enthält einen "ON"-Ausgang, welcher mit einem Anschluß der Magnetspule 32 und dem zweiten Anschluß (Ausgangsanschluß) des Ausschalters 52' verbunden ist. Der zweite Anschluß (Ausgangsanschluß) des Ausschalters 50' ist über einen normalerweise geschlossenen, durch eine Magnetspule betätigten Schalter 46' mit der Magnetspule 32 und dem zweiten Anschluß des Ausschalters 52' verbunden. Der Schalter 46' wird durch eine Magnetspule 58 und einen Komparator 56 dann geöffnet, wenn die Fahrzeuggeschwindigkeit einen vorherbestimmbaren Geschwindigkeitswert (Ref. Sp.) übersteigt. Das Ventil 30' zeigt eine Lage, in der die Kupplung 22 mit einem Ölrücklaufbehälter verbunden ist (Kupplung 22 im Eingriff). Hierbei ist die Magnetspule 32 erregt. In weiterer Hinsicht ist die Fig. 2 ähnlich mit der Fig. 1, wobei sich entsprechende Teile mit denselben Bezugsziffern belegt wurden. Durch den Steuerkreis 40 gemäß Fig. 2 wird die Kupplung 22 nur dann in Eingriff gebracht, wenn die Spule 32 erregt ist.

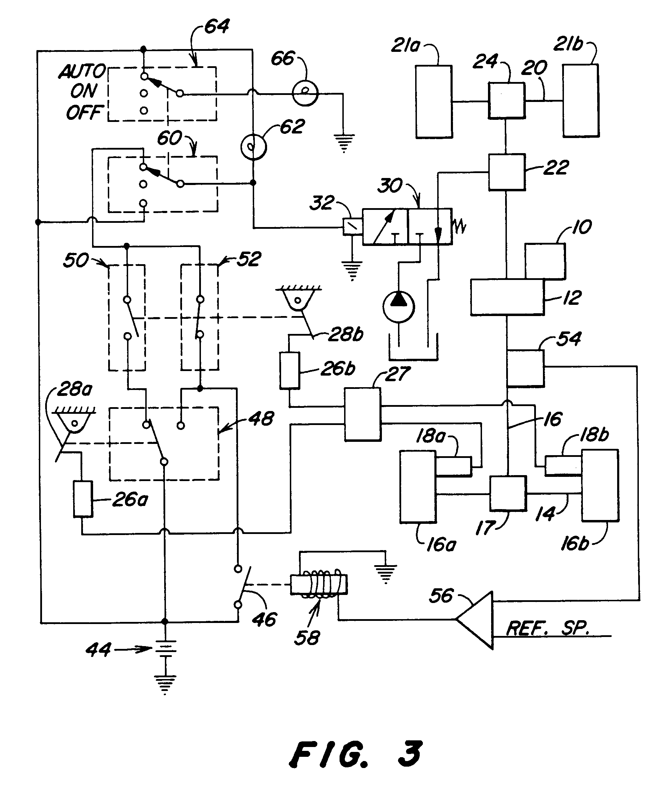

Eine weitere Ausführung der vorliegenden Erfindung ist der Fig. 3 zu entnehmen. Diese alternative Ausbildung ist ähnlich mit der in Fig. 1 gezeigten, unterscheidet sich jedoch in folgender Hinsicht. In Fig. 3 ist das Schaltschütz 46 unmittelbar mit dem ersten Anschluß (Eingangsanschluß) des Ausschalters 52 verbunden. Die Batterie 44 ist unmittelbar mit dem ersten Anschluß (Eingangsanschluß) des Umschalters 48 verbunden. In Fig. 3 ist ein erster handbetätigbarer Schalter 60 enthalten, welcher einen ersten Anschluß (Eingangsanschluß) aufweist, der mit der Magnetspule 32 und einer Seite einer Anzeigelampe 42 verbunden ist. Ein zweiter Anschluß (Ausgangsanschluß) ist mit dem zweiten Anschluß der Schalter 50 und 52 verbunden. Ein dritter Anschluß ist frei. Ein vierter Anschluß (Ausgangsanschluß) ist mit der Batterie 44 verbunden. Der Schalter 60 ist durch ein Schaltelement, durch welches der erste Anschluß des Schalters 60 mit seinem zweiten, dritten oder vierten Anschluß verbindbar ist, von Hand betätigbar.

Der Kreis gemäß Fig. 3 enthält ferner einen zweiten handbetätigbaren Schalter 64, welcher einen ersten, über eine Anzeigenlampe 62 mit Erde verbundenen Anschluß, einen zweiten mit der Batterie 44 und der anderen Seite der Anzeigelampe 62 verbundenen Anschluß, einen dritten und einen vierten freien Anschluß und ein handbetätigbares Schaltelement aufweist, durch welches der erste Anschluß des Schalters 64 mit seinem zweiten, dritten oder vierten Anschluß verbindbar ist. Vorzugsweise sind die Schaltelemente der Schalter 60 und 64 miteinander mechanisch gekoppelt, wie dies in Fig. 3 durch eine gestrichelte Linie angedeutet ist. Die Lampen 62 und 64 sind vorzugsweise in der nicht dargestellten Fahrzeugkabine angeordnet, so daß sie dem Fahrzeugführer eine Anzeige über den Eingriffszustand der Kupplung 22 und darüber, ob die Schalter 60 und 64 in der "AUTO"-Position stehen, liefern.

Der Schaltkreis gemäß Fig. 3 wirkt genauso wie der Schaltkreis gemäß Fig. 1 mit der Ausnahme, daß die Anzeigelampe 62 immer dann aufleuchtet, wenn die Kupplung 22 in Eingriff steht und immer dann ausgeschaltet ist, wenn die Kupplung 22 nicht in Eingriff steht. Ferner leuchtet die Anzeigelampe 66 nur dann auf, wenn die Schalter 60 und 62 sich in der "AUTO"-Position befinden, d.h. wenn ihre jeweils ersten und zweiten Anschlüsse miteinander verbunden sind.

Eine weitere alternative Ausbildung der Erfindung geht aus Fig. 4 hervor. Diese Ausbildung ist ähnlich mit der Ausbildung gemäß Fig. 3, ausgenommen, daß die Verdrahtung des ersten und zweiten handbetätigten Schalters 70, 74 gegenüber Fig. 3 unterschiedlich erfolgt. Der erste handbetätigte Schalter 70 enthält einen ersten Anschluß (Eingangsanschluß), welcher mit der Magnetspule 32 und einer Seite einer Anzeigemittel bzw.- lampe 72 verbunden ist, einen zweiten und vierten Anschluß (Ausgangsanschlüsse), welche zusammengeschaltet sind und mit den zweiten Anschlüssen der Schalter 50 und 52 verbunden sind, einen dritten, freien Anschluß und ein Schaltelement, durch welches der erste Anschluß mit einem beliebigen der übrigen Anschlüsse verbindbar ist.

Der zweite handbetätigbare Schalter 74 enthält einen ersten Anschluß (Eingangsanschluß), der mit der anderen Seite der Lampe 72 und der Batterie 44 in Verbindung steht, einen zweiten Anschluß, der über die Anzeigelampe 76 mit Erde in Verbindung steht, einen dritten, freien Anschluß, einen vierten Anschluß welcher mit der gemeinsamen Verbindung zwischen den Schaltern 46, 48 und 52 in Verbindung steht, und einem Schaltelement, welches mit dem Schaltelement des Schalters 70 mechanisch gekoppelt ist und durch welches der erste Anschluß mit einem beliebigen der übrigen Anschlüsse verbindbar ist.

Der Schaltkreis gemäß Fig. 4 wirkt ähnlich wie der Schaltkreis gemäß Fig. 3, jedoch mit der Ausnahme, daß dann, wenn die Schalter 70 und 74 sich in ihrer "OFF"-Position befinden, die Kupplung nur dann in Eingriff steht, wenn beide Bremspedale 28a, 28b betätigt sind. Für einige Gebiete, beispielsweise Europa, wo höhere Transportgeschwindigkeiten erlaubt sind, kann es wünschenswert sein, die Möglichkeit einer Vierradbremse auch dann vorzusehen, wenn die Schalter 70 und 74 in ihrer "OFF"-Position liegen.

## Patentansprüche

1. Antriebs- und Bremsvorrichtung für ein Kraftfahrzeug mit wenigstens einer durch eine Antriebsmaschine (10) und ein Getriebe (12) antreibbaren Hauptachse (14), welche wenigstens ein erstes und ein zweites Rad (16a, 16b) trägt, und mit einer ersten und einer zweiten Betriebsbremse (18a, 18b) zum Bremsen des ersten bzw. zweiten Rades (16a, 16b), ferner mit einer weiteren Achse (20), welche ein weiteres Radpaar (21a, 21b) trägt und zu dem Antriebsstrang über eine Kupplung (22) zuschaltbar ist, wobei die Kupplung (22) in Abhängigkeit von der Bremsbetätigung durch eine Kupplungssteueranordnung (40) automatisch derart beeinflußbar ist, daß die weitere Achse (20) bei Betätigung einer der beiden Betriebsbremsen (18a, 18b), nicht jedoch bei fehlender Bremsbetätigung aus dem Antriebsstrang (16) auskuppelbar ist, dadurch gekennzeichnet, daß die Kupplungssteueranordnung (40) derart ausgelegt ist, daß die weitere Achse (20) bei gleichzeitiger Betätigung beider Betriebsbremsen (18a, 18b) automatisch in den Antriebsstrang eingekuppelt ist.

2. Antriebs- und Bremsvorrichtung nach Anspruch 1, dadurch gekennzeichnet, daß ein Geber (54) zur Erfassung der Fahrzeuggeschwindigkeit vorgesehen ist, und die Kupplungssteueranordnung (40) Mittel aufweist, um bei Überschreiten eines vorgebbaren Geschwindigkeitswertes die weitere Achse (20) aus dem Antriebsstrang (16) automatisch auszukuppeln.

3. Antriebs- und Bremsvorrichtung nach Anspruch 1 oder 2, dadurch gekennzeichnet, daß die Kupplungssteueranordnung (40) elektrische Spannungssignale zur Beeinflussung einer Kupplungsbetätigungseinrichtung (30, 32) abgibt und einen durch Betätigung der ersten Betriebsbremse (18a) umschaltbaren Umschalter (48), dessen Eingangsanschluß durch ein Schaltelement wahlweise mit einem von zwei seiner Ausgangsanschlüsse verbindbar ist, sowie zwei durch Betätigung der zweiten Betriebsbremse (18b) schaltbare Ausschalter (50, 52), von denen sich jeweils einer in offener und der andere in geschlossener Stellung befindet und deren Eingangsanschlüsse jeweils mit einem der Ausgangsanschlüsse des Umschalters (48) verbunden sind, enthält, und daß der Eingangsanschluß des Umschalters (48) einerseits und die miteinander verbundenen Ausgangsanschlüsse der Ausschalter (50, 52) andererseits zwischen den ersten Pol einer Spannungsquelle (44) und einem ersten elektrischen Anschluß der Kupplungsbetätigungseinrichtung geschaltet sind, während der zweite Pol der Spannungsquelle (44) und der zweite Anschluß der Kupplungsbetätigungseinrichtung unmittelbar in elektrischem Kontakt stehen.

4. Antriebs- und Bremsvorrichtung nach Anspruch 3, dadurch gekennzeichnet, daß die Schaltstellungen des Umschalters (48) und der Ausschalter (50, 52) so vorgegeben sind, daß nur dann zwischen dem Eingangsanschluß des Umschalters (48) und den miteinander verbundenen Ausgangsanschlüssen der Ausschalter (50, 52) eine elektrische Verbindung über die Schalter (48, 50, 52) hergestellt ist, wenn lediglich eine der Betriebsbremsen (18a, 18b) betätigt ist, und daß die Kupplungsbetätigungseinrichtung bei anstehendem Spannungssignal die Kupplung (22) öffnet.

5. Antriebs- und Bremsvorrichtung nach Anspruch 3 oder 4, dadurch gekennzeichnet, daß ein auf Schaltmittel einwirkender Fahrzeuggeschwindigkeitsaufnehmer (54) vorgesehen ist, und daß die Schaltmittel nur bei Überschreiten eines vorgebbaren Fahrzeuggeschwindigkeitswertes einen Kontakt (46) schließen, um den ersten Pol der Spannungsquelle (44) mit dem Eingangsanschluß des bei unbetätigten Betriebsbremsen (18a, 18b) geschlossenen Ausschalters (52) zu verbinden (Fig. 1, 3, 4).

6. Antriebs- und Bremsvorrichtung nach Anspruch 3 oder 4, dadurch gekennzeichnet, daß ein auf Schaltmittel einwirkender Fahrzeuggeschwindigkeitsaufnehmer (54) vorgesehen ist, daß die Schaltmittel nur bei Überschreiten eines vorgebbaren Fahrzeuggeschwindigkeitswertes einen Kontakt (46') öffnen, und daß der Kontakt (46') unmittelbar in Reihe mit dem bei unbetätigten Betriebsbremsen (18a, 18b) geschlossenen Ausschalter (50') liegt (Fig. 2).

7. Antriebs- und Bremsvorrichtung nach einem der Ansprüche 3 bis 6, dadurch gekennzeichnet, daß ein Betriebsartschalter (42, 42', 60, 64, 70, 74) vorgesehen ist, der mit dem ersten Pol der Spannungsquelle (44), der Kupplungsbetätigungseinrichtung und der aus dem Umschalter (48) und den Auschaltern (50, 52) bestehenden Schaltungsanordnung in Verbindung steht, daß in einer Automatikstellung (AUTO) die Kupplungsbetätigungseinrichtung als Funktion der Betriebsbremsenbetätigung gesteuert wird und in einer ON-Stellung die Kupplungsbetätigungseinrichtung ein Einkuppeln der Kupplung (22) unabhängig von der Betätigung der Betriebsbremsen bewirkt.

8. Antriebs- und Bremsvorrichtung nach Anspruch 7, dadurch gekennzeichnet, daß der Betriebsartschalter (42, 42', 60, 64, 70, 74) eine OFF-Stellung aufweist, in der die Kupplungsbetätigungseinrichtung veranlaßt wird, die Kupplung (22) unabhängig von der Betätigung der Betriebsbremsen (18a, 18b) auszukuppeln (Fig. 1, 2, 3).

9. Antriebs- und Bremsvorrichtung nach Anspruch 8, dadurch gekennzeichnet, daß als Betriebsartschalter ein erster durch eine Betätigungsperson betätigbarer, drei Schaltstellungen aufweisender Schalter (42a, 42') vorgesehen ist, dessen Eingangsanschluß mit einem von seinen drei Ausgangsanschlüssen durch Umschalten verbindbar ist, daß der Eingangsanschluß des Schalters (42a, 42') mit dem ersten Pol der Spannungsquelle (44) verbunden ist und in wenigstens einer Schaltstellung (AUTO) über einen seiner Ausgangsanschlüsse mit dem Eingangsanschluß des Umschalters (48) verbunden ist, während in einer weiteren Stellung (OFF in Fig. 1 bzw. ON in Fig. 2) der Eingang des Schalters (42a, 42') über einen weiteren seiner Ausgänge mit dem ersten Anschluß der Kupplungsbetätigungseinrichtung elektrisch verbunden ist und in einer dritten Schaltstellung (ON in Fig. 1 bzw. OFF in Fig. 2) der Eingang des Schalters (42a, 42') mit keiner Ausgangsleitung verbunden ist (Fig. 1 und 2).

10. Antriebs- und Bremsvorrichtung nach Anspruch 8, dadurch gekennzeichnet, daß als Betriebsartschalter ein erster durch eine Bedienungsperson betätigbarer, drei Schaltstellungen aufweisender Schalter (60) vorgesehen ist, dessen Eingangsanschluß mit einem von seinen drei Ausgangsanschlüssen durch Umschalten verbindbar ist, und daß der Eingangsanschluß des Schalters (60) mit dem ersten Anschluß der Kupplungsbetätigungseinrichtung elektrisch verbunden ist und in wenigstens einer Schaltstellung (AUTO) des Schalters (60) sein Eingangsanschluß über einen seiner Ausgangsanschlüsse mit den miteinander verbundenen Ausgangsanschlüssen der Ausschalter (50, 52) verbunden ist, in einer weiteren Schaltstellung (OFF) der Eingangsanschluß des Schalters (60) über einen weiteren seiner Ausgangsanschlüsse mit dem ersten Pol der Spannungsquelle (44) verbunden ist und in einer dritten Schaltstellung (ON) der Eingangsanschluß des Schalters (60) mit keiner Ausgangsleitung verbunden ist (Fig. 3).

11. Antriebs- und Bremsvorrichtung nach einem der Ansprüche 7 bis 9, dadurch gekennzeichnet, daß ein zweiter durch eine Bedienungsperson betätigbarer, drei Schaltpositionen aufweisender Schalter (42b), der mit dem ersten durch eine Bedienungsperson betätigbaren Schalter (42a) gekoppelt ist, vorgesehen ist, daß dieser zweite Schalter in Reihe zum Kontakt (46) liegt und in der Automatikstellung (AUTO) geschlossen und in einer anderen Stellung (ON, OFF) geöffnet ist (Fig. 1).

12. Antriebs- und Bremsvorrichtung nach Anspruch 7, dadurch gekennzeichnet, daß der Betriebsartschalter (42, 42', 60, 64, 70, 74) eine OFF-Stellung aufweist, in der die Kupplungsbetätigungseinrichtung veranlaßt wird, die Kupplung (22) nur dann einzukuppeln, wenn beide Betriebsbremsen (18a, 18b) gleichzeitig betätigt werden (Fig. 4).

13. Antriebs- und Bremsvorrichtung nach Anspruch 12, dadurch gekennzeichnet, daß als Betriebsartschalter ein erster durch eine Bedienungsperson betätigbarer, drei Schaltstellungen aufweisender Schalter (60), vorgesehen ist, dessen Eingangsanschluß mit einem von drei seiner Ausgangsanschlüsse durch Umschalten verbindbar ist, daß der Eingangsanschluß des Schalters (70) mit dem ersten Anschluß der Kupplungsbetätigungseinrichtung elektrisch verbunden ist und in zwei Schaltstellungen (AUTO, OFF) des Schalters (70) sein Eingangsanschluß über einen von zwei seiner zusammengeschalteten Ausgangsanschlüsse mit den beiden Ausgangsanschlüssen der Ausschalter (50, 52) elektrisch verbunden ist, und daß ein zweiter, durch eine Bedienungsperson betätigbarer, drei Schaltpositionen aufweisender Schalter (74), der mit dem ersten, durch eine Bedienungsperson betätigbaren Schalter (70) gekoppelt ist, vorgesehen ist, wobei der zweite Schalter (74) in einer der Schaltstellungen (OFF) den Eingangsanschluß des bei unbetätigten Betriebsbremsen (18a, 18b) geschlossenen Ausschalters (52) mit dem ersten Pol der Spannungsquelle (44) verbindet.

14. Antriebs- und Bremsvorrichtung nach Anspruch 7 bis 13, dadurch gekennzeichnet, daß wenigstens eine Betriebsartanzeige (66, 76) zur Erzeugung von durch eine Bedienungsperson erkennbaren Signalen, die den Betriebszustand des Betriebsartschalters (42, 42', 60, 64, 70, 74) entsprechen, vorgesehen ist.

15. Antriebs- und Bremsvorrichtung nach Anspruch 14, dadurch gekennzeichnet, daß die Betriebsartanzeige (66, 76) nur dann ein Signal erzeugt, wenn sich der Betriebsartschalter (42, 42', 60, 64, 70, 74) in seiner Automatikstellung (AUTO) befindet.

16. Antriebs- und Bremsvorrichtung nach Anspruch 15, dadurch gekennzeichnet, daß ein zweiter durch eine Bedienungsperson betätigbarer, drei Schaltpositionen aufweisender Schalter (64, 74), der mit dem ersten Schalter (60, 70) gekoppelt ist, vorgesehen ist, daß der zweite Schalter (64, 74) in der Automatikschaltstellung (AUTO) einen Anschluß der Betriebsanzeige (66, 76) mit dem ersten Pol der Spannungsquelle (44) verbindet, und daß ein anderer Anschluß der Betriebsanzeige (66, 76) mit dem zweiten Pol der Spannungsquelle (44) verbunden ist.

17. Antriebs- und Bremsvorrichtung nach einem der Ansprüche 3 bis 16, dadurch gekennzeichnet, daß wenigstens ein Anzeigemittel (72) zur Erzeugung von durch eine Bedienungsperson erkennbaren Signalen, die dem Schaltzustand der Kupplung (22) entsprechen, vorgesehen ist.

18. Antriebs- und Bremsvorrichtung nach Anspruch 17, dadurch gekennzeichnet, daß das Anzeigemittel (72) elektrisch zwischen dem ersten Pol der Spannungsquelle (44) und dem ersten Anschluß der Kupplungsbetätigungseinrichtung (32) angeordnet ist.

## Claims

1. Propulsion and braking device for a motor vehicle with at least one main axle (14) drivable by an engine (10) and a gear system (12), and which carries at least one first and one second wheel (16a, 16b), and with a first and a second operating brake (18a, 18b) for braking the first or second wheel (16a, 16b), further with a second axle (20), which carries a further pair of wheels (21a, 21b), and is connectable to the drive train via a clutch (22), the clutch (22) being capable of being automatically influenced, in dependence on the brake actuation, by a clutch control arrangement (40), in such a way that the further axle (20) may be disengaged from the drive train (16) upon actuation of one of the two operating brakes (18a, 18b), but not when the brake actuation is absent, characterised in that the clutch control arrangement (40) is so designed that the further axle (20) is automatically engaged with the drive train when both operating brakes (18a, 18b) are simultaneously actuated.

2. Propulsion and braking device according to claim 1, characterised in that a transmitter is provided for detecting the vehicle speed, and the clutch control arrangement (40) includes means for automatically disengaging the further axle (20) from the drive train (16) when a predeterminable speed value is exceeded.

3. Propulsion and braking device according to claim 1 or 2, characterised in that the clutch control arrangement (40) emits electrical voltage signals in order to influence a clutch actuating device (30, 32), and includes a changeover switch (48) which is switched over upon actuation of a first operating brake (18a), the input contact of said clutch actuating device (30, 32) being selectably connectable by means of a switch element to one of two output contacts, and two circuit-breakers (50, 52) which are switchable by actuation of the second operating brake (18b), one of said circuit-breakers being in the open, and the other in the closed position respectively, and each of their input contacts being respectively connected to one of the output contacts of the changeover switch (48), and in that the input contact of the changeover switch (48) on the one hand, and the interconnected output contacts of the circuit breakers (50, 52) on the other hand, are incorporated in circuit between the first pole of a voltage source (44) and a first electrical contact of the clutch actuating device, while the second pole of the voltage source (44) and the second contact of the clutch actuating device are in direct electrical contact.

4. Propulsion and braking device according to claim 3, characterised in that the switch positions of the changeover switch (48) and of the circuit breakers (50, 52) are preselected in such a way that an electrical connection is produced via the switches (48, 50, 52) between the input contact of the changeover switch (48) and the interconnected output contacts of the circuit breakers (50, 52) only when only one of the operating brakes (18a, 18b) is actuated, and in that the clutch actuating device opens the clutch (22) when a voltage signal is present.

5. Propulsion and braking device according to claim 3 or 4, characterised in that a vehicle speed receiver (54) is provided which acts upon switching means, and in that the switching means close a contact (46) only when a predeterminable vehicle speed value is exceeded, in order to connect the first pole of the voltage source (44) with the input contact of the circuit breaker (52) which is closed when the operating brakes (18a, 18b) are not actuated (Fig. 1, 3, 4).

6. Propulsion and braking device according to claim 3 or 4, characterised in that a vehicle speed receiver (54) is provided which acts upon switching means, in that the switching means open a contact (46') only when a predeterminable vehicle speed value is exceeded, and in that the contact (46') is directly in series with the circuit breaker (50') which is closed when the operating brakes (18a, 18b) are not actuated (Fig. 2).

7. Propulsion and braking device according to one of claims 3 to 6, characterised in that an operation-mode switch (42, 42', 60, 64, 70, 74) is provided, which is in connection with the first pole of the voltage source (44), with the clutch actuating device and with the switching arrangement comprising the changeover switch (48) and the circuit breakers (50, 52), and in that, in an automatic position (AUTO), the clutch actuating device is controlled as a function of actuation of the operating brakes and, in an ON position, the clutch actuating device effects engagement of the clutch (22) independently of actuation of the operating brakes.

8. Propulsion and braking device according to claim 7, characterised in that the operation-mode switch (42, 42', 60, 64, 70, 74) has an OFF position in which the clutch actuating device is caused to disengage the clutch (22) independently of actuation of the operating brakes (18a, 18b) (Figs. 1, 2, 3).

9. Propulsion and braking device according to claim 8, characterised in that there is provided, as an operation-mode switch, a first switch (42a, 42a') having three switching positions and being actuable by an operative, and whose input contact may be connected by switching over with one of its three output contacts, in that the input contact of the switch (42a, 42a') is connected to the first pole of the voltage source (44) and, in at least one switch position (AUTO) is connected via one of its output contacts to the input contact of the changeover switch (48), while in a further position (OFF in Fig. 1 or ON in Fig. 2), the input contact of the switch (42a, 42a') is electrically connected via a further one of its outputs with the first contact of the clutch actuating device, and in a third switch position (ON in Fig. 1 or OFF in Fig. 2), the input contact of the switch (42a, 42a') is not connected to any output line (Figs. 1 and 2).

10. Propulsion and braking device according to claim 8, characterised in that there is provided, as an operation-mode switch, a first switch (60) having three switching positions and being actuable by an operative, and whose input contact may be connected to one of its three output contacts by switching over, and in that the input contact of the switch (60) is electrically connected to the first contact of the clutch actuating device, and in at least one switch position (AUTO) of the switch (60), its input contact is connected via one of its output contacts to the interconnected output contacts of the circuit breakers (50, 52), in a further switch position (OFF), the input contact of the switch (60) is connected via another of its output contacts with the first pole of the voltage source (44), and in a third switch position (ON), the input contact of the switch (60) is not connected to any output line (Fig. 3).

11. Propulsion and braking device according to one of claims 7 to 9, characterised in that there is provided a second switch (42b) having three switching positions and being actuable by an operative, said switch (42b) being coupled to the first switch (42a) actuable by an operative, in that this second switch is in series with the contact (46), is closed in the automatic position (AUTO), and is open in another position (ON, OFF) (Fig. 1).

12. Propulsion and braking device according to claim 7, characterised in that the operation-mode switch (42, 42', 60, 64, 70, 74) has an OFF position in which the clutch actuating device is caused to engage the clutch (22) only when both operating brakes (18a, 18b) are actuated simultaneously (Fig. 4).

13. Propulsion and braking device according to claim 12, characterised in that there is provided, as an operation-mode switch a first switch (60) having three switching positions and being actuable by an operative, and whose input contact may be connected with one of three of its output contacts by switching over, in that the input contact of the switch (70) is electrically connected to the first contact of the clutch actuating device, and in two switch positions (AUTO, OFF) of the switch (70) its input contact is electrically connected via one of two of its combined output contacts to the two output contacts of the circuit breakers (50,52), and in that there is provided a second switch (74) having three switching positions and being actuable by an operative, said switch (74) being coupled with the first switch (70) actuable by an operative, the second switch (74), in one of the switching positions (OFF), connecting the input contact of the circuit breaker (52) which is closed when the operating brakes (18a, 18b) are not actuated, to the first pole of the voltage source (44).

14. Propulsion and braking device according to claims 7 to 13, characterised in that there is provided at least one indicator (66, 76) of operational mode, for generating signals corresponding to the operational condition of the operation-mode switch (42, 42', 60, 64, 70, 74), and which are recognisable to an operative.

15. Propulsion and braking device according to claim 14, characterised in that the indicator (66, 76) of operational mode generates a signal only when the operation-mode switch (42, 42' 60, 64, 70, 74) is in its automatic position (AUTO).

16. Propulsion and braking device according to claim 15, characterised in that there is provided a second switch (64, 74) having three switching positions and being actuable by an operative, and which is coupled to the first switch (60, 70), in that the second switch (64, 74), in the automatic switching position (AUTO), connects one contact of the operational indicator (66, 76) to the first pole of the voltage source (44), and in that another contact of the operational indicator (66, 76) is connected to the second pole of the voltage source (44).

17. Propulsion and braking device according to one of claims 3 to 16, characterised in that there is provided at least one indicator means (72) for generating signals which are recognisable to an operative, and which correspond to the switching condition of the clutch (22).

18. Propulsion and braking device according to claim 17, characterised in that the indicator means (72) are disposed electrically between the first pole of the voltage source (44) and the first contact of the clutch actuating device (32).

## Revendications

1. Dispositif d'entraînement et de freinage pour un véhicule automobile, avec au moins un essieu principal (14), qui peut être entraîné par un moteur (10) et une boîte de vitesses (12) et qui porte au moins une première et une deuxième roues (16a, 16b), et avec un premier et un deuxième freins de service (18a, 18b) pour freiner respectivement la première et la deuxième roues (16a, 16b), ainsi qu'avec un essieu auxiliaire (20), qui porte une autre paire de roues (21a, 21b) et qui peut être relié à la chaîne d'entraînement par l'intermédiaire d'un embrayage (22), l'embrayage (22) pouvant être commandé automatiquement, en fonction de l'actionnement du frein, par un ensemble de commande d'embrayage (40) de telle sorte que l'essieu auxiliaire (20) peut être désaccouplé de la chaîne d'entraînement (16) en cas d'actionnement d'un des deux freins de service (18a, 18b), mais non en l'absence d'actionnement des freins, **caractérisé** en ce que l'ensemble de commande d'embrayage (40) est conçu de telle sorte que l'essieu auxiliaire (20) est automatiquement accouplé dans la chaîne d'entraînement en cas d'actionnement simultané des deux freins de service (18a, 18b).

2. Dispositif d'entraînement et de freinage selon la revendication 1, **caractérisé** en ce qu'un capteur (54) est prévu pour enregistrer la vitesse du véhicule, et l'ensemble de commande d'embrayage (40) présente des moyens pour désaccoupler automatiquement l'essieu auxiliaire (20) de la chaîne d'entraînement (16) en cas de dépassement d'une valeur prédéterminable de vitesse.

3. Dispositif d'entraînement et de freinage selon la revendication 1 ou 2, **caractérisé** en ce que l'ensemble de commande d'embrayage (40) délivre des signaux de tension électrique pour agir sur un dispositif d'actionnement d'embrayage (30, 32) et contient un commutateur à deux positions (48), qui peut être commuté par l'actionnement du premier frein de service (18a) et dont la connexion d'entrée peut être reliée au choix, par un élément de commutation, à l'une de ses deux connexions de sortie, ainsi que deux commutateurs de coupure (50, 52), qui peuvent être commutés par l'actionnement du deuxième frein de service (18b), dont l'un se trouve chaque fois en position ouverte et l'autre en position fermée, et dont les connexions d'entrée sont respectivement reliées à l'une des connexions de sortie du commutateur à deux positions (48), et en ce que la connexion d'entrée du commutateur à deux positions (48) d'une part, et les connexions de sortie mutuellement reliées des commutateurs de coupure (50, 52) d'autre part, sont branchées entre le premier pôle d'une source de tension (44) et une première connexion électrique du dispositif d'actionnement d'embrayage, tandis que le deuxième pôle de la source de tension (44) et la deuxième connexion du dispositif d'actionnement d'embrayage sont en contact électrique direct.

4. Dispositif d'entraînement et de freinage selon la revendication 3, **caractérisé** en ce que les positions de commutation du commutateur à deux positions (48) et des commutateurs de coupure (50, 52) sont prédéterminées de telle sorte qu'une liaison électrique, entre la connexion d'entrée du commutateur à deux positions (48) et les connexions de sortie mutuellement reliées des commutateurs de coupure (50, 52), n'est réalisée par l'intermédiaire des commutateurs (48, 50, 52) que si un seul des freins de service (18a, 18b) est actionné, et en ce que le dispositif d'actionnement d'embrayage ouvre l'embrayage (22) en présence d'un signal de tension.

5. Dispositif d'entraînement et de freinage selon la revendication 3 ou 4, **caractérisé** en ce qu'est prévu un capteur de vitesse du véhicule (54) agissant sur des moyens de commutation, et en ce que les moyens de commutation ne ferment un contact (46) qu'en cas de dépassement d'une valeur prédéterminable de vitesse du véhicule, afin de relier le premier pôle de la source de tension (44) à la connexion d'entrée du commutateur de coupure (52), qui est fermé lorsque les freins de service (18a, 18b) ne sont pas actionnés (figures 1, 3, 4).

6. Dispositif d'entraînement et de freinage selon la revendication 3 ou 4, **caractérisé** en ce qu'est prévu un capteur de vitesse du véhicule (54) agissant sur des moyens de commutation, en ce que les moyens de commutation n'ouvrent un contact (46') qu'en cas de dépassement d'une valeur prédéterminable de vitesse du véhicule, et en ce que le contact (46') se trouve directement en série avec le commutateur de coupure (50'), qui est fermé lorsque les freins de service (18a, 18b) ne sont pas actionnés (figure 2).

7. Dispositif d'entraînement et de freinage selon l'une quelconque des revendications 3 à 6, **caractérisé** en ce qu'est prévu un commutateur de mode de fonctionnement (42, 42', 60, 64, 70, 74), qui est relié au premier pôle de la source de tension (44), au dispositif d'actionnement d'embrayage et à l'ensemble de commutation constitué du commutateur à deux positions (48) et des commutateurs de coupure (50, 52), et en ce que, dans une position automatique (AUTO), le dispositif d'actionnement d'embrayage est commandé en fonction de l'actionnement des freins de service, tandis que, dans une position ON, le dispositif d'actionnement d'embrayage (30, 32) produit un accouplement de l'embrayage (22) indépendamment de l'actionnement des freins de service.

8. Dispositif d'entraînement et de freinage selon la revendication 7, **caractérisé** en ce que le commutateur de mode de fonctionnement (42, 42', 60, 64, 70, 74) présente une position OFF dans laquelle le dispositif d'actionnement d'embrayage est conduit à désaccoupler l'embrayage (22) indépendamment de l'actionnement des freins de service (18a, 18b) (figures 1, 2, 3).

9. Dispositif d'entraînement et de freinage selon la revendication 8, **caractérisé** en ce qu'est prévu, comme commutateur de mode de fonctionnement, un premier commutateur (42a, 42') pouvant être actionné par un opérateur, présentant trois positions de commutation et dont la connexion d'entrée peut être reliée par commutation à l'une de ses trois connexions de sortie, et en ce que la connexion d'entrée du commutateur (42a, 42') est reliée au premier pôle de la source de tension (44) et, dans au moins une position de commutation (AUTO), est reliée, par l'intermédiaire d'une des connexions de sortie dudit commutateur, à la connexion d'entrée du commutateur à deux positions (48), tandis que, dans une autre position (OFF sur la figure 1 ou ON sur la figure 2), l'entrée du commutateur (42a, 42') est électriquement reliée, par l'intermédiaire d'une autre des sorties dudit commutateur, à la première connexion du dispositif d'actionnement d'embrayage, et que, dans une troisième position de commutation (ON sur la figure 1 ou OFF sur la figure 2), l'entrée du commutateur (42a, 42') n'est reliée à aucune ligne électrique de sortie (figures 1 et 2).

10. Dispositif d'entraînement et de freinage selon la revendication 8, **caractérisé** en ce qu'est prévu, comme commutateur de mode de fonctionnement, un premier commutateur (60) pouvant être actionné par un opérateur, présentant trois positions de commutation et dont la connexion d'entrée peut être reliée par commutation à l'une de ses trois connexions de sortie, et en ce que la connexion d'entrée du commutateur (60) est électriquement reliée à la première connexion du dispositif d'actionnement d'embrayage et, dans au moins une position de commutation (AUTO) du commutateur (60), sa connexion d'entrée est reliée, par l'intermédiaire d'une de ses connexions de sortie, aux connexions mutuellement reliées des commutateurs de coupure (50, 52), tandis que, dans une autre position de commutation (OFF), la connexion d'entrée du commutateur (60) est reliée, par l'intermédiaire d'une autre de ses connexions de sortie, au premier pôle de la source de tension (44), et que, dans une troisième position de commutation (ON), la connexion d'entrée du commutateur (60) n'est reliée à aucune ligne électrique de sortie (figure 3).

11. Dispositif d'entraînement et de freinage selon l'une quelconque des revendications 7 à 9, **caractérisé** en ce qu'est prévu un deuxième commutateur (42b) pouvant être actionné par un opérateur, présentant trois positions de commutation et qui est couplé au premier commutateur (42a) pouvant être actionné par un opérateur, et en ce que ce deuxième commutateur se trouve en série avec le contact (46) et est fermé dans la position automatique (AUTO) et ouvert dans une autre position (ON, OFF) (figure 1).

12. Dispositif d'entraînement et de freinage selon la revendication 7, **caractérisé** en ce que le commutateur de mode de fonctionnement (42, 42', 60, 64, 70, 74) présente une position OFF dans laquelle le dispositif d'actionnement d'embrayage est conduit à n'accoupler l'embrayage (22) que si les deux freins de service (18a, 18b) sont simultanément actionnés (figure 4).

13. Dispositif d'entraînement et de freinage selon la revendication 12, **caractérisé** en ce qu'est prévu, comme commutateur de mode de fonctionnement, un premier commutateur (70) pouvant être actionné par un opérateur, présentant trois positions de commutation et dont la connexion d'entrée peut être reliée par commutation à l'une de ses trois connexions de sortie, en ce que la connexion d'entrée du commutateur (70) est électriquement reliée à la première connexion du dispositif d'actionnement d'embrayage et, dans deux positions de commutation (AUTO, OFF) du commutateur (70), sa connexion d'entrée est électriquement reliée, par l'intermédiaire d'une de deux de ses connexions de sortie qui sont mutuellement reliées, aux deux connexions de sortie des commutateurs de coupure (50, 52), et en ce qu'est prévu un deuxième commutateur (74) pouvant être actionné par un opérateur, présentant trois positions de commutation et qui est couplé au premier commutateur (70) pouvant être actionné par un opérateur, le deuxième commutateur (74) reliant, dans une des positions de commutation (OFF), la connexion d'entrée du commutateur de coupure (52), qui est fermé lorsque les freins de service (18a, 18b) ne sont pas actionnés, au premier pôle de la source de tension (44).

14. Dispositif d'entraînement et de freinage selon l'une quelconque des revendications 7 à 13, **caractérisé** en ce qu'est prévu au moins un indicateur de fonctionnement (66, 76) pour produire des signaux, reconnaissables par un opérateur, qui correspondent à l'état de fonctionnement du commutateur de mode de fonctionnement (42, 42', 60, 64, 70, 74).

15. Dispositif d'entraînement et de freinage selon la revendication 14, **caractérisé** en ce que l'indicateur de fonctionnement (66, 76) ne produit un signal que si le commutateur de mode de fonctionnement (42, 42', 60, 64, 70, 74) se trouve dans sa position automatique (AUTO).

16. Dispositif d'entraînement et de freinage selon la revendication 15, **caractérisé** en ce qu'est prévu un deuxième commutateur (64, 74) pouvant être actionné par un opérateur, présentant trois positions de commutation et qui est couplé au premier commutateur (60, 70), en ce que le deuxième commutateur (64, 74) relie, dans la position automatique (AUTO), une connexion de l'indicateur de fonctionnement (66, 76) au premier pôle de la source de tension (44), et en ce qu'une autre connexion de l'indicateur de fonctionnement (66, 76) est reliée au deuxième pôle de la source de tension (44).

17. Dispositif d'entraînement et de freinage selon l'une quelconque des revendications 3 à 16, **caractérisé** en ce qu'est prévu au moins un moyen indicateur (72) pour produire des signaux, reconnaissables par un opérateur, qui correspondent à l'état d'accouplement de l'embrayage (22).

18. Dispositif d'entraînement et de freinage selon la revendication 17, **caractérisé** en ce que le moyen indicateur (72) est électriquement disposé entre le premier pôle de la source de tension (44) et la première connexion du dispositif d'actionnement d'embrayage (32).
